# FASCICULE DE BREVET EUROPEEN

(11) **EP 1 849 750 B1**
(45) Date de publication et mention de la délivrance du brevet: **18.06.2008**
(21) Numéro de dépôt: 06007110.7
(22) Date de dépôt: 04.04.2006
(51) Int. Cl.: C02F 9/14, C02F 3/06, C02F 3/10, C02F 3/22, C02F 11/18, C02F 3/30, C02F 1/24, C02F 1/76

(54) **Installation et procédé de traitement des eaux usées avec un réacteur vertical tubulaire**
Vorrichtung und Verfahren zur Abwasserbehandlung mit einem rohrförmigen, senkrechten Reaktor
Installation and process for waste water treatment with a tubular, vertical reactor

(43) Date de publication de la demande: 31.10.2007
(73) Titulaire: TECHNOINDUSTRIE S.A., 1207 Genève (CH)
(72) Inventeur: Croisy, Nicolas, 1219 Le Lignon (CH)
(74) Mandataire: Bugnion Genève

(56) Documents cités:
- EP-A1- 0 100 953
- WO-A-20/04035488
- WO-A2-02/072485
- DE-U1- 9 304 698
- JP-A- 3 207 493

## Description

La présente invention concerne une installation de traitement des eaux usées civiles ou industrielles comprenant principalement des moyens de filtration des eaux usées en amont d'un réacteur biologique vertical et en aval de ce réacteur un réservoir de flottaison de la biomasse produite dans le réacteur, des moyens de sédimentation, et de chloration, ainsi qu'un procédé de traitement.

Le traitement des eaux usées est réalisé actuellement avec des installations volumineuses et coûteuses qui ne conviennent pas pour les petites villes et zones industrielles.
Dans les WO 2004/035488 et WO 02/072485 de telles installations à réacteur verticale sont proposées.

L'invention propose une installation et un procédé de traitement des eaux permettant de combiner les avantages du réacteur vertical tubulaire, d'une zone à biomasse adhérée et d'une phase dispersée.

L'installation et le procédé sont déterminés par la partie caractérisante des revendications 1 et 8 les autres revendications concernent des variantes d'exécution.

Le principe de fonctionnement est celui caractéristique des traitements biologiques, pour lesquels l'objectif est d'éliminer les substances contaminantes des eaux en les transformant en biomasse qui peut ensuite être transformée moyennant des méthodes physiques et mécaniques en déchets neutres,

L'invention prévoit un réacteur biologique vertical développé en profondeur (max. 80 m) dans lequel on obtient la décomposition de la substance organique et sa minéralisation en biomasse qui se trouvera en partie sur un support fixe, constitué par de tubes en matériau plastique situés à une profondeur déterminée afin de créer un lit de boue biologique à concentration élevée, et en partie de phase dispersée sur la partie située au dessus du support fixe.

Une telle installation est adaptée pour le traitement des eaux usées provenant de petites et moyennes villes (1.000 à 60.000 habitants) ou de zones industrielles.

Un des avantages l'installation et procédé est sans aucun doute le très bas impact sur l'environnement, du fait que tout le traitement est basé sur le réacteur vertical.

C'est donc une installation techniquement avancée et se prête sûrement :
- dans le cas d'installations devant être réalisées comme complément aux lignes existantes lorsque l'espace à disposition est limité ou s'il faut opérer de lieux habités ;
- dans le cas d'installations industrielles qui ont des charges organiques élevées dans les reflux de production mais nécessitent une limitation des encombrements dédiés aux traitements ;
- dans le cas où des installations hautes et coûteuses de pompage le long des égouts sont nécessaires, dans un tel cas il pourrait être avantageux, au lieu d'installer une station de pompage, de réaliser le traitement sur place.

En plus on obtient:
- Des coûts de gestion bas et de traitements efficaces ;
- Une haute efficacité de transfert de l'oxygène ;
- Odeurs et émissions ammoniaquées minimes comparées avec des procédés et installations conventionnelles ;
- Coûts en énergie sensiblement mineurs par rapport aux procédés d'aération conventionnels.

Le traitement des eaux, selon l'invention, permet de retirer le substrat carboné, présent dans l'effluent, dans le puits vertical, dans lequel on vient insuffler l'oxygène et de retirer celui azoté dans une section de traitement conventionnel située en amont et aval de la phase de refoulement des solides qui se fait en utilisant la sursaturation de la masse par l'air.

L'invention sera décrite plus en détails avec l'aide du dessin annexé.
La figure 1 est une vue schématique de l'installation.
La figure 2 est une vue partielle d'une partie du réacteur.
La figure 3 est une vue schématique du réacteur montrant certains détails

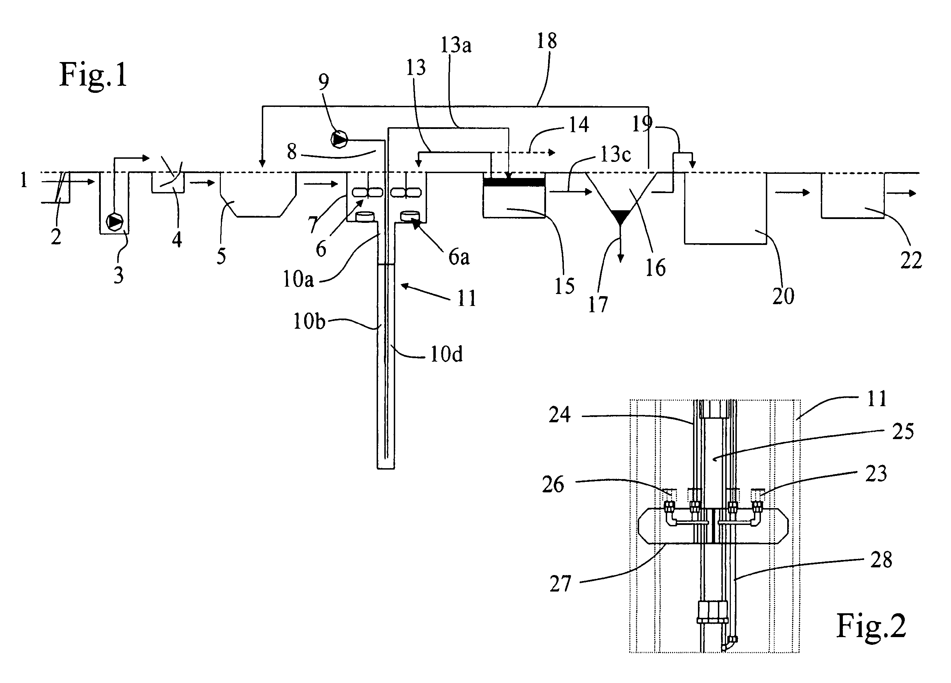

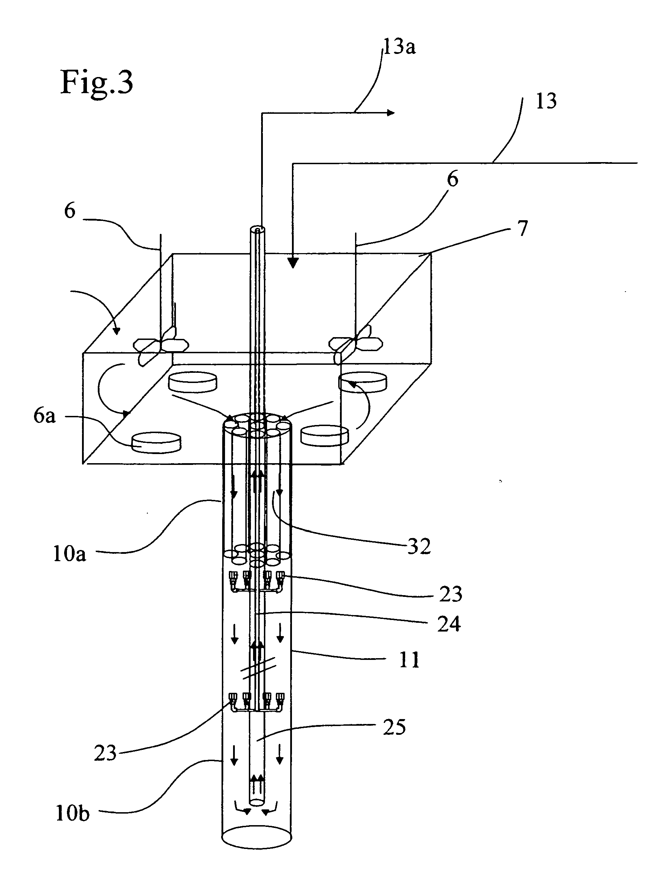

L'installation (figure 1) comprend une arrivée 1 des eaux usées avec une première grille 2 permettant de retenir les objets encombrants. Les eaux passent dans une station de levage 3 et ensuite passent à travers un microfiltre 4 permettant d'éliminer la plus grande partie de particules et sable en suspension dans les eaux avant de passer dans réservoir 5 où le processus de dénitrification est amorcé. Les eaux viennent ensuite dans un réservoir d'homogénéisation 7 muni de plusieurs mélangeurs 6 et d'aérateurs 6a. Le réservoir d'homogénéisation 7 surmonte un réacteur vertical 11. Le réacteur 11 a une forme tubulaire et il est fait d'un matériau plastique à haute résistance, logé dans un puits creusé dans le sol dont les parois sont, de préférence, habillées d'un manteau métallique. Il comprend un conduit concentrique 10d pour faire monter les eaux traitées du fond du réacteur 11. De l'air sous pression est insufflé par un compresseur 9 dans le réacteur. Le réacteur sera décrit plus en détails à l'aide des figures 2 et 3 ultérieurement.

Les eaux remontant par le tube 10d sont conduites dans le réservoir par une canalisation 13a vers un réservoir de flottaison 15. Une conduite 13 permet à volonté de remettre en circulation une partie de la masse flottante vers le réservoir d'homogénéisation 7. Les eaux du réservoir de flottaison 15 sont conduites par un conduit 13c vers un réservoir de sédimentation 16. Ensuite, un conduit 19 amène les eaux vers un réservoir anaérobique de dénitrification 20. Les eaux chargées en nitrates résiduels peuvent à volonté être reconduites vers le réservoir de pré-dénitrification par un conduit 18. Les boues du réservoir de sédimentation sont évacuées par un conduit 17 situé au fond du réservoir 16. Les eaux passent du réservoir 20 vers un réservoir de chloration 22 et ensuite sont évacuées vers un bassin d'eaux claires ou vers tout autre réservoir pouvant les recevoir.

A la figure 2 on voit une section du réacteur 11 munie d'un dispositif de diffusion d'air sous pression 23. Un conduit 24 alimente en air le dispositif 23. Un autre conduit 28 insuffle de l'air sous pression dans le réacteur pour faire monter les eaux traitées par un conduit central 25. Le dispositif 23 est muni de plusieurs bouches de diffusion 26 et d'une ailette 27 permettant d'éviter les vibrations.

A la figure 3, on voit le réservoir d'homogénéisation 7 avec les mélangeurs 6 surmontant le réacteur 11. Le réacteur comprend un conduit central 25 supportant un conduit 24 d'alimentation en air des diffuseurs 23. Les eaux suivent dans le réacteur 11 le chemin indiqué par les flèches. Dans la partie inférieure du réservoir 7 la transformation des substances contaminantes en biomasse débute sous la présence de l'oxygène contenu dans l'air insufflé par les dispositifs de diffusion 6a et 23 situés dans le réacteur. On se trouve dans une zone avec de la biomasse dispersée.

Le réacteur 11 comprend une première partie 10a délimitée par un ensemble de tubes 32 d'un matériau plastique. Dans cette partie 10a mesurant environ quinze mètres, on insuffle une très grande quantité d'air et la biomasse adhère sur les tubes 32. On est dans la zone à biomasse adhérée. Cette partie 10a représente environ un tiers de la longueur total du réacteur. La seconde partie 10b d'une longueur de d'environ soixante cinq mètres avec une moindre quantité d'air insufflé permet de réaliser le finissage du traitement. Des capteurs le long du réacteur permettent de mesurer la quantité d'oxygène et de modifier en conséquence à distance la quantité d'air insufflé dans ces trois zones.

L'ensemble de tubes 32 en matériau plastique fixés le long du tube 25 permet la formation d'un lit de boue. La croissance de la biomasse est réglée au moyen de phases alternées de lavage par le reflux lui-même et par le frottement ascendant des bulles d'air.

La section de nitrification est constituée par le dispositif d'aération 6 A et la partie supérieure du réacteur composée des tubes 32 alimenté en air par le dispositif 23.

Le traitement dans le réacteur pour le refoulement du substrat carbonique suit les principes de fonctionnement classiques de la littérature en la matière enrichie d'éléments innovants du point de vue du procédé.

Suivant le schéma conventionnel l'oxygène à l'intérieur du réacteur permet le développement de la biomasse qui utilise le substrat carbonique pour le développement de nouvelles cellules. L'effet de la pression élevée, selon la loi d'Henry, permet de dissoudre une quantité élevée d'oxygène dans l'eau transformant ainsi le système en un système biologique dans lequel l'oxygène ne constitue pas un élément limitatif.

Le rendement élevé de transfert d'oxygène permet d'obtenir une économie considérable opérationnelle par rapport aux installations conventionnelles à boues actives.

L'introduction de tubes dans la partie supérieure du réacteur favorise la génération d'un lit à haute concentration de biomasse. Le développement d'un tel lit filtrant biologique est provoqué suite à une sélection naturelle de micro-organismes types qui favorisent les espèces qui réussissent à se multiplier.

La concentration élevée d'air dissout, grâce aux pressions élevées auxquelles le reflux est soumis, permet une fluidisation du matériau en suspension à la sortie du réacteur fournissant une clarification élevée de l'effluent permettant de séparer facilement la phase solide de la phase liquide avec des temps de contact bas et donc en réduisant l'espace utilisé.

L'action des bactéries dans le réacteur se limite, en l'état d'études actuelles, exclusivement au refoulement des composts organiques carbonés. L'absence des phénomènes biologiques de transformation de l'azote ammoniaqué dans le puits, normalement présent dans les reflux de type civil ou agroalimentaire, fait présumer, en absence d'études spécifiques, que la trop forte pression au fond du puits produit un effet inhibant. Dans un tel cas, s'il est nécessaire d'effectuer la transformation de l'azote ammoniaqué en nitrate en amont du fond du réacteur.

Dans la chambre d'homogénéisation les eaux sont mélangées avec le reflux qui a déjà subi le procédé et qui est riche en biomasse active et maintenu en agitation. Dans le réacteur vertical on peut constater la transformation du substrat carbonés oeuvré par la biomasse. La transformation est provoquée par les bactéries adhérentes sur des supports et nageant librement.. Les eaux traversent trois couches de biomasse à concentration différente.

La première couche est constituée de biomasse dispersée, la seconde couche de biomasse adhérée. Dans cette partie 10a, la biomasse se développe sur un support constitué de tubes 32 Ce lit filtrant est développé à l'intérieur du réacteur entre 0 et 15 m de profondeur, et permet, outre la minéralisation de la substance organique dissoute, la nitrification de l'azote ammoniacal, le piégeage du matériau solide en suspension, garantissant la clarification de l'effluent.

Par contre, la seconde partie 10b est une zone de finissage dans laquelle des colonies de micro-organismes spécifiques sont en mesure de se nourrir de la biomasse arrivant des couches supérieures. Dans cette phase il y a enrichissement en air nécessaire à l'oxydation de la matière organique et pour lever la boue sortante qui sera purgée.

A l'intérieur du réacteur, on peut donc constater les procédés de transformation biologique. L'air sous pression permet de soulever une portée constante de façon continue ou alternée.

Le conduit 13 permet de faire re-circuler la liqueur mixte extraite du bassin 15 et provenant du reflux du fond du réacteur 11. De cette façon il est possible de faire varier le temps de contact de la boue avec l'effluent et ainsi de contrôler l'âge de la boue.

Les solides suspendus retenus par la biomasse en excès produite par l'activité biologique ont tendance à entasser le lit granuleux qui nécessite donc un lavage. On réalisera ce lavage en augmentant alternativement de façon pulsée la rapidité de rappel du refoulement du fond du réacteur au moyen de l'air sous pression et la pression de soufflage de l'oxygène au moyen des diffuseurs mécaniques mis en correspondance au lit.

Pour aider le détachement de la biomasse interviennent en outre des procédés biologiques. En effet, en augmentant l'épaisseur de la couche de biomasse, la partie la plus épaisse et proche du support, ne reçoit plus de substrat en suffisance et entre en respiration endogène se détachant naturellement de la communauté microbienne et est ainsi expulsée avec l'effluent. De telles parts de biomasse résultent également en une bonne sédimentation car elles sont constituées de flocs agglomérés.

La portée est amenée dans le bassin de flottaison, qui a une fonction de dissipateur d'énergie, où la sursaturation du reflux permet une séparation rapide de la boue et de l'effluent clarifié.

Les eaux sans matière solide grâce au réservoir de sédimentation finissent dans le réservoir 20 où il subit le processus de dénitrification. En cas de nécessité le reflux est envoyé dans le réservoir de pré-dénitrification où la basse concentration en oxygène amorce le procédé de dénitrification, autrement il est simplement destiné à la chloration où il subit un processus de désinfection.

## Revendications

1. Installation de traitement des eaux usées civiles ou industrielles comprenant principalement des moyens de filtration des eaux usées en amont d'un réacteur biologique vertical et en aval de ce réacteur un réservoir de flottaison de la biomasse produite dans le réacteur, des moyens de sédimentation, et de chloration, le réacteur vertical ayant une forme tubulaire surmontée d'un réservoir d'homogénéisation recevant les eaux usées à traiter et muni des dispositifs d'agitation pour homogénéiser la masse à traiter, **caractérisée par le fait que** le réacteur est divisé en deux parties, la partie supérieure correspondant à environ le tiers de la hauteur du réacteur est délimitée par un ensemble de tubes d'un matériau plastique disposés axialement autour de l'axe du réacteur et d'une partie s'étendant sur les deux tiers inférieures, que les deux parties sont munies de diffuseurs d'air sous pression, qu'un conduit est situé à intérieur du réacteur pour permettre le refoulement vers le haut de la masse traitée située au fond du réacteur sous l'action de l'air sous pression débouchant par un conduit dont la sortie est située à la seconde partie du réacteur, que des valves et conduits amènent la masse traitée vers le réservoir de flottaison.

2. Installation selon la revendication 1, **caractérisée par le fait que** le réacteur est muni des capteurs dans les deux parties pour mesurer la concentration d'oxygène et l'optimiser en agissant sur l'alimentation en air à travers les diffuseurs.

3. Installation selon l'une des revendications 1 ou 2, **caractérisée par le fait qu'**après les moyens de levage comprend un réservoir de pré-dénitrification.

4. Installation selon la revendication 3, **caractérisée par le fait qu'**un réservoir d'homogénéisation situé au-dessus de réacteur est pourvu d'aérateur contribue à la transformation de l'azote ammoniaqué contenu dans la biomasse traitée en nitrate.

5. Installation selon l'une des revendications 1 à 4, **caractérisée par le fait qu'**après les moyens de sédimentation de la biomasse un réservoir de dénitrification transforme les nitrates en azote gazeux.

6. Installation selon la revendication 5, **caractérisée par le fait qu'**un conduit permet qu'une partie au moins du nitrate résiduel puisse revenir dans le réservoir de pré-dénitrification.

7. Installation selon l'une des revendications 1 à 4, **caractérisée par le fait qu'**un conduit permet de ramener une partie de la biomasse contenue dans le réservoir de flottaison vers le réservoir d'homogénéisation.

8. Procédé de traitement des eaux usées civiles ou industrielles au moyen de l'installation selon l'une des revendications 1 à 7, en faisant passer les eaux à travers des moyens de filtration pour retenir les objets et détritus volumineux, en les conduisant dans un mélangeur pour homogénéiser la masse, **caractérisé en ce que** l'on les fait passer dans un réacteur vertical comprenant deux parties successives, dans lesquelles de l'air sous pression est diffusé de manière continue pour transformer les substances contaminantes en biomasse, dans la première partie la quantité d'air insufflée est supérieure à celle insufflée dans la seconde, obtenant ainsi dans la première zone une biomasse adhérée et nitrifiante, sur les tubes en matériau plastique situés axialement dans le réacteur qui délimitent la première partie et ensuite dans la seconde partie qui est la partie de finissage et on renvoie l'effluent vers le réservoir de flottaison, qu'à partir du réservoir de flottaison on conduit la masse vers les moyens de sédimentation, ensuite au réservoir de dénitrification et ensuite aux moyens de chloration.

9. Procédé selon la revendication 8, **caractérisé par le fait qu'**une partie de la masse flottante est conduite du réservoir de flottaison vers le réservoir d'homogénéisation en fonction des besoins.

## Claims

1. Installation for domestic or industrial waste water treatment, essentially comprising filtration means for the waste water disposed upstream of a vertical biological reactor and a flotation basin downstream of this reactor for treating the biomass produced in said reactor, further comprising sedimentation means and chlorinating means, said vertical reactor having a tubular shape and being surmounted by a homogenisation basin that receives the waste water to be treated and being equipped with agitating devices for the homogenisation of the mass to be treated, **characterised by** the fact that the reactor is divided into two parts, the upper part which corresponds to about one third of the reactor height being delimited by a set of tubes of a plastics material, axially disposed around the axis of the reactor, and another part extending by the lower two thirds of the reactor, that these two parts are equipped with diffusers discharging compressed air under pressure, that a conduit is positioned in the interior of the reactor for allowing to displace upward the treated mass situated at the bottom of the reactor under the influence of compressed air introduced through a conduit whose exit is disposed within the second part of the reactor, and that valves and conduits transport the treated mass into the flotation basin.

2. The installation according to claim 1, **characterised by** the fact that the two parts of the reactor are equipped with detectors for the measurement of the oxygen concentration and its optimisation by acting on the air feed through the diffusers.

3. The installation according to claim 1 or 2, **characterised by** the fact that a pre-denitrification basin is disposed after the lifting means.

4. The installation according to claim 3, **characterised by** the fact that a homogenisation basin, positioned above the reactor and equipped with an aerator, contributes to the transformation to nitrates of the ammonia nitrogen contained in the biomass.

5. The installation according to any one of claims 1 to 4, **characterised by** the fact that a denitrification basin, situated after the sedimentation means of the biomass, serves to carry out the transformation of the nitrates into gaseous nitrogen.

6. The installation according to claim 5, **characterised by** the fact that a conduit allows the return of at least a portion of residual nitrate into the pre-denitrification basin.

7. The installation according to any one of claims 1 to 4, **characterised by** the fact that a conduit allows the return of a portion of the biomass contained in the flotation basin, into the homogenisation basin.

8. A process for the treatment of domestic or industrial waste water in an installation according to any one of claims 1 to 7, in which the water is passed through filtration means in order to retain voluminous objects and garbage pieces, and then the water is transferred into a mixer for effecting a homogenisation of the mass, **characterised by** the fact that the water is fed into a vertical reactor comprising two successive parts into which compressed air is diffused in a continuous manner, in order to transform contaminating substances into a biomass, that the amount of air introduced into the first reactor part exceeds that injected into the second part, thus obtaining within the first zone a nitrifying biomass adhering to the tubes of plastics material disposed axially within the reactor and delimiting its first part, and then passing the mass over into the second reactor part which is the finishing zone, and that the reactor effluent is transferred into the flotation basin, the mass then being sent into the sedimentation means, subsequently into the denitrification basin, and finally to the chlorinating means.

9. The process according to claim 8, **characterised by** the fact that a portion of the floating mass is transferred from the floating basin into the homogenisation basin if necessary.

## Patentansprüche

1. Anlage zur Behandlung von Haushalt- und Industrieabwässern, welche vornehmlich Mittel zum Filtrieren der Abwässer vor ihrem Eintritt in einen vertikal angeordneten biologischen Reaktor und ein Becken zur Flotation der Biomasse, die im Reaktor erzeugt wird, nach dem Ausgang des Reaktors enthält, weiterhin Mittel zur Sedimentierung und zur Chlorierung, wobei der vertikale Reaktor rohrförmig ausgebildet und unter einem Homogenisierbecken angeordnet ist, in welches die zu behandelnden Abwässer eingeleitet werden, und in welchem Mittel zum Umwälzen der zu behandelnden Masse zwecks deren Homogenisation eingebaut sind, **dadurch gekennzeichnet, dass** der Reaktor in zwei Bereiche aufgeteilt ist, wobei der obere Bereich, der etwa einem Drittel der Höhe des Reaktors entspricht, durch ein Bündel von Rohren aus Kunststoff begrenzt ist, welche axial um die Reaktorachse angeordnet sind, und sich der untere Bereich über die beiden unteren Drittel der Höhe erstreckt, dass in beiden Bereichen Diffusoren für Druckluft angebracht sind, dass im Inneren des Reaktors eine Leitung verläuft, die zur Rückführung der am Boden des Reaktors ankommenden behandelten Masse nach oben dient, und zwar unter dem Einfluss von Druckluft, welche aus einer Leitung ausströmt, deren Ausgang sich im zweiten Bereich des Reaktors befindet, und dass Ventile und Leitungen zum Einleiten der behandelten Masse in das Flotationsbecken vorgesehen sind.

2. Anlage nach Anspruch 1, **dadurch gekennzeichnet, dass** in den beiden Bereichen des Reaktors Detektoren zur Messung der Konzentration von Sauerstoff und zu deren Optimierung angebracht sind, welche auf die Zufuhr von Luft durch die Diffusoren einwirken.

3. Anlage nach Anspruch 1 oder 2, **dadurch gekennzeichnet, dass** nach den Mitteln zum Fördern der Abwässer ein Becken zur Vor-Denitrifikation vorgesehen ist.

4. Anlage nach Anspruch 3, **dadurch gekennzeichnet, dass** ein Homogenisierbecken, welches sich über dem Reaktor befindet, mit einer Belüftungseinrichtung versehen ist, die zur Umwandlung des Stickstoffs, der in der behandelten Biomasse als Ammoniak vorliegt, in Nitrat beiträgt.

5. Anlage nach einem der Ansprüche 1 bis 4, **dadurch gekennzeichnet, dass** ein Becken zur Denitrifizierung, welches nach den Mitteln zur Sedimentierung der Biomasse angeordnet ist, die Nitrate in gasförmigen Stickstoff überführt.

6. Anlage nach Anspruch 5, **dadurch gekennzeichnet, dass** eine Leitung vorgesehen ist, die ermöglicht, dass mindestens ein Teil des restlichen Nitrats in das Becken zur Vor-Denitrifizierung zurückgeführt werden kann.

7. Anlage nach einem der Ansprüche 1 bis 4, **dadurch gekennzeichnet, dass** eine Leitung die Rückführung eines Teils der Biomasse, die sich im Flotationsbecken befindet, in das Homogenisierbecken ermöglicht.

8. Verfahren zur Behandlung von Haushalt- und Industrieabwässern in der Anlage nach einem der Ansprüche 1 bis 7, bei dem die Abwässer durch die Mittel zum Filtrieren hindurch geleitet werden, um voluminöse Gegenstände und Abfälle zurückzuhalten, und einen Mischer zwecks Homogenisierung der Masse durchlaufen, **dadurch gekennzeichnet, dass** die Abwässer durch einen senkrecht stehenden Reaktor geleitet werden, welcher zwei aufeinanderfolgende Bereiche aufweist, in denen Luft kontinuierlich unter Druck in die Abwässer eingeleitet wird, um die Verunreinigungen in Biomasse zu überführen, wobei die zugeführte Luftmenge im ersten Bereich des Reaktors grösser als im zweiten Bereich ist und wobei im ersten Bereich eine stickstoffhaltige und an den Kunststoffrohren, die sich axial im Reaktor erstrecken und den ersten Bereich begrenzen, anhaftende Biomasse erhalten wird, dass die Abwässer dann in den zweiten Bereich gelangen, welcher den Fertigstellungsbereich darstellt, dass dann die vorgereinigten Abwässer in das Flotationsbecken geleitet werden, und dass die Masse den Mitteln zur Sedimentierung, dann dem Denitrifikationsbecken und schliesslich den Mitteln zur Chlorierung zugeführt wird.

9. Verfahren nach Anspruch 8, **dadurch gekennzeichnet, dass** je nach Bedarf ein Teil der überstehenden Masse vom Flotationsbecken in das Homogenisierbecken überführt wird.
